# EUROPEAN PATENT APPLICATION

(11) **EP 1 205 639 A1**
(43) Date of publication of application: **15.05.2002**
(21) Application number: 01309383.6
(22) Date of filing: 06.11.2001
(51) Int. Cl.: F01D 17/16

(54) **Inner shroud retaining system for variable stator vanes**

(30) Priority: 09.11.2000 US 710657
(71) Applicant: GENERAL ELECTRIC COMPANY, Schenectady, NY 12345 (US)
(72) Inventor: Bouyer, Mark Jeffery, Reading, Massachusetts 01867 (US)
(74) Representative: Pedder, James Cuthbert

(57) **Abstract**

An assembly is provided for retaining together in a turbofan engine (10) a variable stator vane (38) and the inner vane shroud (42). The assembly includes a modified vane trunnion (62) terminating in a flange (64) and a bushing (66) positioned within a shroud port (60) for receiving the trunnion (62). A retaining comb (72) positioned between the vane flange (64) and a flange (68) of the bushing (66) captures the vane trunnion (62) within the bushing (66). A shroud retainer (76) affixed to the outer surface of the shroud (42) captures the retaining comb (72) to the trunnion (62) and the bushing (66). The retainer (76) preferably spans a series of shroud sections (42) for as much as about one-half of the entire circumference of the shroud (42). The combination of the modified trunnion (62) and the retaining comb (72) with significant span reduces movement between the bushing (66) and the vane (38). Wear on the vane trunnion (62) and contaminant infiltration between the trunnion (62) and the bushing (66) are reduced. Maintenance obligations are correspondingly reduced.

## Description

This invention relates generally to gas turbine engines and more particularly to compressor vanes and shroud supports for such engines.

A turbofan gas turbine engine used for powering an aircraft in flight typically includes, in serial flow communication, a fan, a low pressure compressor or booster, a high pressure compressor, a combustor, a high pressure turbine, and a low pressure turbine. The combustor generates combustion gases that are channeled in succession to the high pressure turbine where they are expanded to drive the high pressure turbine, and then to the low pressure turbine where they are further expanded to drive the low pressure turbine. The high pressure turbine is drivingly connected to the high pressure compressor via a first rotor shaft, and the low pressure turbine is drivingly connected to both the fan and the booster via a second rotor shaft.

The high pressure compressor typically includes a series of stator vane stages used to compress air for engine and aircraft use. The stator vane stages include at least an inlet guide stage and one or more following stator vane stages. The inlet guide stage and the stator vane stages are formed of a plurality of circumferentially arranged cantilevered stator vanes. The vanes may be actuated through a control system so as to optimize airflow for power and stall avoidance purposes. The vanes are retained between a stator case and an inner vane shroud. The stator case is coupled to the engine case. The space between the stator case and the shroud defines the volume of air passing through the high pressure compressor. The shroud provides an aerodynamic flowpath boundary of the high pressure compressor.

In some engines, the stator vanes are variably actuated through the operation of one or more controllable vane actuators. An outer trunnion or spindle of the vane passes through the stator case and is coupled to a lever arm. The lever arm is coupled to an actuation ring that is connected to a vane actuator. One or more vane actuators effect movement to the series of circumferentially arranged stator vanes of each compressor stage. The vane is retained to the stator case through a combination of bushings, washers, and a lock nut that is threaded onto the outer trunnion.

The vane also includes an inner trunnion at its opposing end. That inner trunnion is used to retain the vane to the inner vane shroud. In most cases, a plurality of vanes are spanned and retained by one shroud section. A plurality of shroud sections extends completely around the inner circumference of the compressor to retain all vanes. The inner trunnion of the vane is removably affixed to the shroud by way of a bushing. The bushing has a hollow cylindrical section for receiving the inner trunnion. The cylindrical section terminates in a substantially square or rectangular flange. The flange is retained within capturing rails at the interior of the shroud. The shroud rails are designed to prevent rotation of the bushing by fixing the bushing flange in place between the rails.

In addition to the individual vane bushings, two shroud pins, one at each of the inner trunnions of the two end vanes of a particular shroud section, secure the shroud section to that set of vanes. For example, a shroud section made for five vanes is secured to the inner trunnions of those five vanes by way of bushings. Flanged bushings are the only securing mechanism for the three interior vanes. The two outer vanes of the shroud section each has a modified inner trunnion or spindle with a hemispherical cut-out for accepting a retaining pin. In addition, the bushings associated with those outer vanes also have C-shaped cutouts through which the retaining pins pass. The retaining pin passes transversely through the bushing and is designed to remain captured in the hemispherical cutout of the modified inner trunnion.

Groups of shroud sections are coupled together through a common shroud retainer or seal. The shroud retainer is designed to capture flanges or wings of the shroud sections below the inner trunnion. In those turbine engines where shroud retainers are employed, they are formed to provide coverage to approximately one-quarter of the inner circumference of the compressor stage.

That is, they extend approximately 90° of the inner 360° circumference, thereby capturing a plurality of shroud sections. Linking a series of vanes together using the shroud sections and then coupling a series of shroud sections together using the set of shroud retainers is intended to tighten together the vanes. That along with the shroud pins is designed to reduce vane loosening, much like the spokes of a bicycle wheel are captured and retained together on a wheel hub.

Unfortunately, constant aerodynamic pressure forces associated with the operation of the high pressure compressor force movement of the inner shroud toward the stator case. That movement along with normal engine vibrations and vane turning cause the bushing to wear into the vane's lower spindle or trunnion. Eventually, a lip is worn into the lower trunnion, particularly for the bushings having the cutouts that permit passage of the outer shroud vane retaining pins. The lip in turn grabs the cylindrical portion of the bushing and brings the bushing along with the vane as the vane rotates. The force exerted by the rotating vane on the bushing caught on the trunnion is sufficient to cause rotation of the entire bushing, including the flange or bushing "hat." Ordinarily, the bushing is fabricated of very hard metal. As a result, movement of the flange produces a galling of the interior of the shroud capturing rails. The rail galling yields increased movement of the bushing with vane rotation and further galling. Therefore, what is needed is a vane to shroud contact arrangement that will rotatably secure the vane to the shroud without generating wear on the vane's lower trunnion.

Additional deficiencies associated with the described vane-to-shroud retention systems relate to contaminant infiltration. Specifically, dirt and other contaminants infiltrate the gap between the bushing and the trunnion through the retaining pin cutout of the bushing and the shroud regions through which retaining pins pass. The contaminant accumulates in that confined space to the point that the vane cannot rotate smoothly in the bushing. The drag increases between the two until the accumulation is so great that the bushing spins with the vane. As indicated, rotation of the bushing causes galling of the shroud capture rails. Therefore, what is needed is a vane to shroud contact arrangement that will rotatably secure the vane to the shroud without establishment of the type of gap that permits contaminant accumulation at the bushing-to-vane interface.

The above-mentioned needs are met by the present invention, which provides a coupling or retaining assembly for retaining a rotatable structure to a fixed casing. The retaining assembly includes a rotatable structure having a capture end terminating in an arcuate structure. A bushing designed to pass through the port of the casing retains the outer capture end of the rotatable structure. At the inner vane trunnion a retaining comb is disposed between the inner trunnion flange and the split bushing flange. The retaining comb is designed to allow the rotatable structure to rotate therein. In addition, a retainer that is removably coupleable to the segmented arcuate inner shrouds and disposed thereon, retains the rotatable structure, the bushing, and the retaining comb together.

The assembly is suitable for use with turbofan engines having compressor stages. As previously indicated, the variable stator vane stages of the compressor include a plurality of variable guide vanes disposed between the stator casing and the inner vane shroud. The retaining assembly of the present invention includes for each vane-to-shroud a modified vane having a trunnion terminating in a trunnion flange. The assembly also includes a bushing removably retained within a port of the vane shroud for receiving the trunnion. The bushing includes a bushing flange. A retaining comb member is disposed between the bushing flange and the trunnion flange, and is designed to permit the trunnion to rotate therein. The assembly further includes a shroud sealing retainer removably coupleable to the outer surface of the shroud and disposed thereon to retain the retaining comb to the bushing and to the trunnion flange.

The present invention and its advantages over the prior art will become apparent upon reading the following detailed description and the appended claims with reference to the accompanying drawings.

The invention will now be described in greater detail, by way of example, with reference to the drawings, in which:-

Figure 1 is a partial schematic cross-sectional view of a turbofan engine incorporating the vane retaining assembly of the present invention.

Figure 2 is a partial cut-away perspective view of the high pressure compressor section of the engine of Figure 1.

Figure 3 is a partial exploded perspective view of the retaining assembly of the engine of Figure 1.

Figure 4 is a simplified side view of a stator vane and showing the vane-to-shroud retaining assembly of the present invention.

Figure 5 is a simplified perspective view of the retaining assembly of the present invention partially assembled.

Figure 6 is a simplified representation of the retaining assembly of the present invention showing the arrangement of the retaining comb and the sealing retainer in relation to the inner shroud.

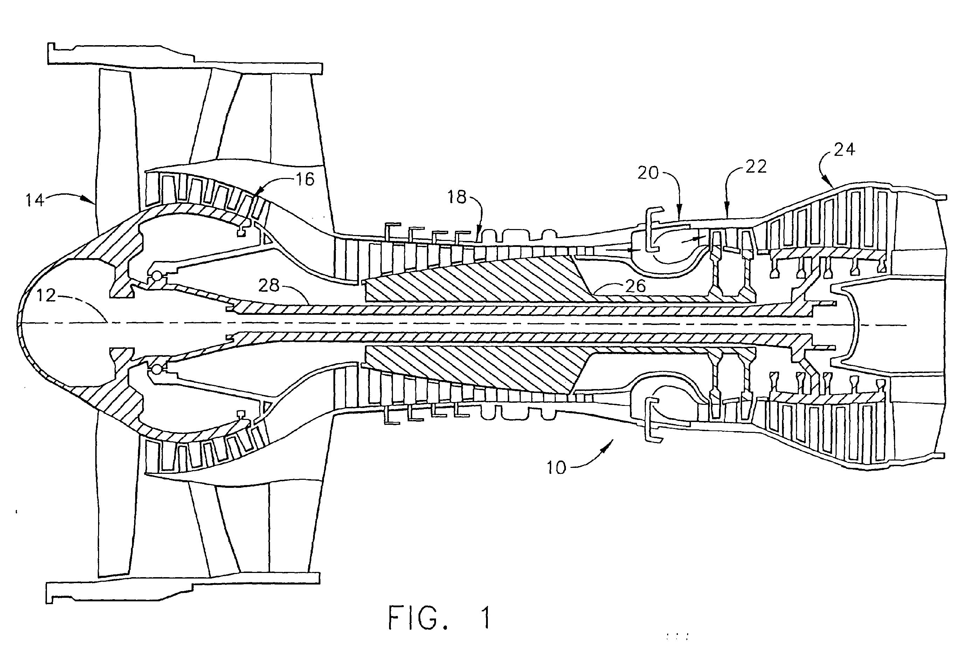

Referring to the drawings wherein identical reference numerals denote the same elements, Figure 1 illustrates a longitudinal cross-sectional view of a high bypass ratio turbofan engine 10. The engine 10 includes, in serial axial flow communication about a longitudinal centerline axis 12, a fan 14, a booster 16, a high pressure compressor 18, a combustor 20, a high pressure turbine 22, and a low pressure turbine 24. The high pressure turbine 22 is drivingly connected to the high pressure compressor 18 with a first rotor shaft 26, and the low pressure turbine 24 is drivingly connected to both the booster 16 and the fan 14 with a second rotor shaft 28, which is disposed within the first rotor shaft 26.

During operation of engine 10, ambient air passes through the fan 14, the booster 16, and the compressor 18 to be pressurized in succession. Some of the ambient air is bled off for supplemental functions while the primary pressurized air stream enters the combustor 20 where it is mixed with fuel and burned to provide a high energy stream of hot combustion gases. The high-energy gas stream passes through the high-pressure turbine 22 where it is further expanded, with energy being extracted to drive the first rotor shaft 26. The gas stream then passes through the low-pressure turbine 24 where energy is extracted to drive the second rotor shaft 28 and, thus, the fan 14. Spent products of combustion and unused gas pass out of the engine 10 through an exhaust duct.

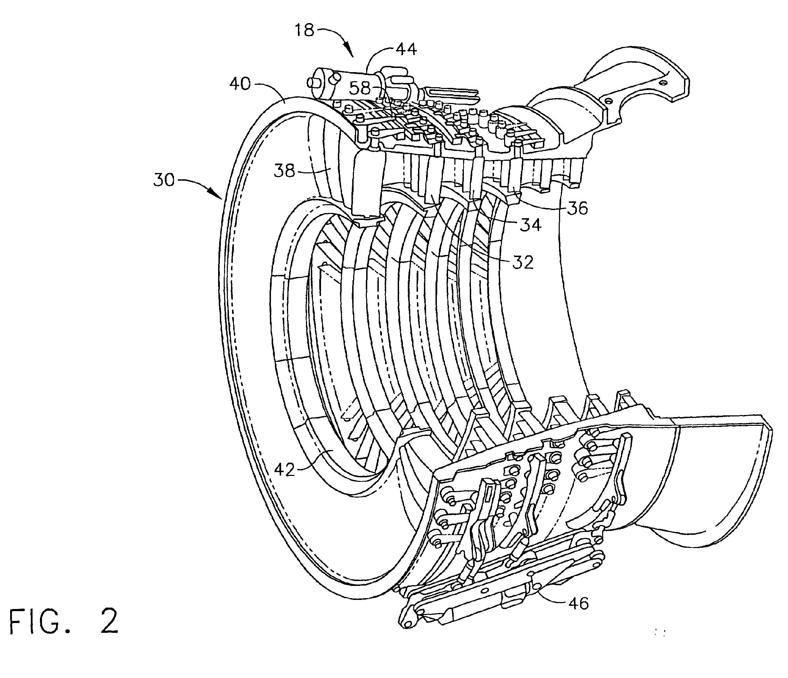

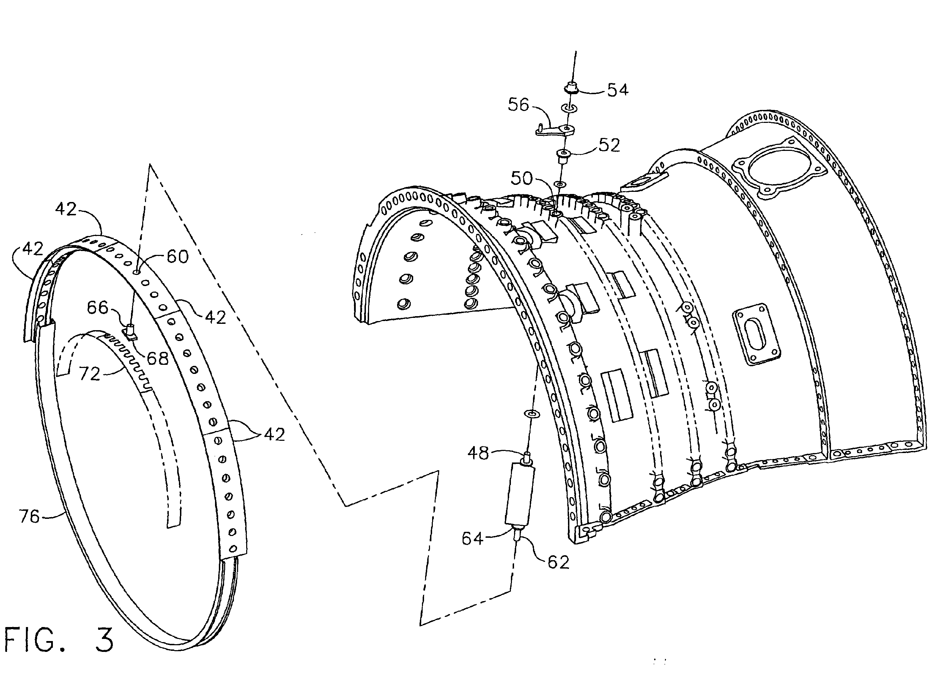

Turning to Figure 2, it is seen that, among other components, the compressor 18 includes an inlet guide vane stage 30 and a set of following variable vane stator stages 32, 34, and 36. The annular dimensions of each of stages 30-36 becomes increasingly smaller to compress the air for use in following engine stages. Each of the stages of the compressor 18 includes a set of circumferentially arranged vanes 38 captured between a stator case 40 of the compressor 18 and a vane shroud 42. As shown particularly in Figure 3, the shroud 42 is actually formed of a set of shroud sections 42.

With continuing reference to Figure 3, the vanes 38 are variably actuated by a set of variable vane actuators 44, 46. The vanes 38 are coupled through the stator case 40 to the actuators 44,46 by way of a vane outer trunnion 48. The outer trunnion 48 passes through a stator case port 50 and is retained by way of an outer bushing 52 and an outer nut 54. A lever arm 56 is captured between the bushing 52 and the outer nut 54. The lever arm 56 is coupled to the vane actuators 44,46 through linkage arms 58.

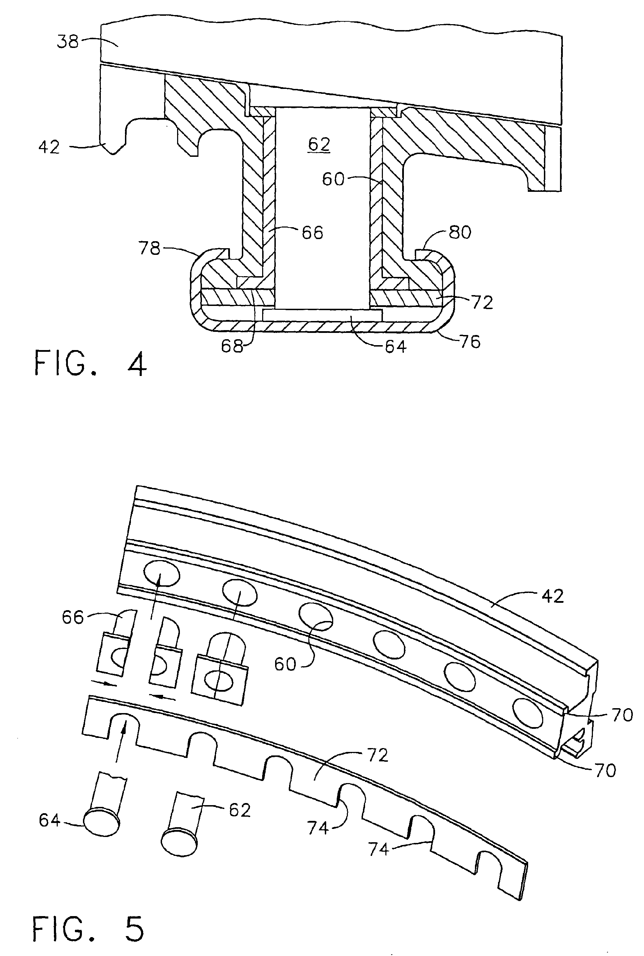

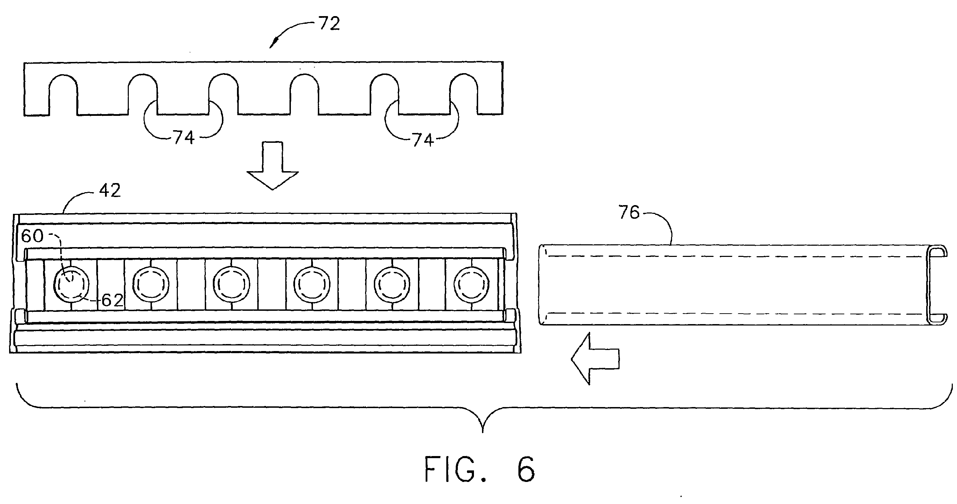

With reference to Figures 3-6, rotation of the vanes 38 is further enabled by the coupling of sets of the vanes 38 to respective ones of the inner vane shroud sections 42. Each shroud section includes a plurality of shroud ports 60, and each port 60 is designed to accept an inner trunnion 62 of individual ones of the vanes 38. The inner trunnion 62 includes a trunnion flange 64. The inner trunnion 62 is initially captured in the port 60 using a split shroud bushing 66 that fits in the port 60. A split bushing is used in order to place the trunnion within the bushing 66 in the shroud port 60 while permitting the trunnion flange 64 to extend beyond a bushing flange 68. That trunnion flange 64 has dimensions greater than the dimensions of the bushing flange 68 and greater than the inner dimensions of shroud rails 70 that retain the bushing flange 68. An intermediate retaining comb 72 including a plurality of trunnion slots 74 creates a retaining fit of the trunnion flange 64 to the captured bushing flange 68. The retaining comb 72 preferably includes a number of slots 74 corresponding to the number of shroud ports 60. The retaining comb takes up any spacing slack between the two flanges and minimizes damaging effects of vibration. However, the slots 74 are configured to permit the trunnion 62 to rotate therein while retaining the bushing 66 in a fixed position captured by the shroud rails 70.

The shroud sections 42 are further coupled together with a shroud seal retainer 76. The seal retainer 76 includes channel sections 78,80 designed to capture shoulders of the shroud rails 70 of shroud section 42. The retainer 76 extends approximately one-half of the entire inner circumference of the compressor 18, as shown in Figure 3. This span of the retainer 76 is substantially greater than the span of the 90° retainers previously in use. It more effectively ties together groups of shroud sections 42 and, thereby, groups of vanes 38. The result is a spoke effect on the interconnected cantilevered vanes 38. The longer span of the retainer 76 also provides improved prevention of movement of the shroud sections 42 downward away from the inner space of the compressor 18. It further minimizes movement of the bushing 66 with respect to the vane 38 by retaining the comb 72.

Actuation and vibration effects on the shroud-to-vane interfaces are therefore reduced.

The foregoing has described an improved vane-to-shroud retaining arrangement. It may be used with all shroud trunnions, including those vanes with shroud trunnions and bushings that are modified to receive retaining pins. However, with this invention, the vanes and bushings can now all be fabricated without the C-shaped cutouts that generated contaminant entrapment zones and that created shroud lips.

For the sake of good order, various aspects of the invention are set out in the following clauses:-
1. A retaining assembly for retaining a rotatable structure in a port of a casing, the assembly comprising:
   a rotatable structure having a capture end terminating in a structure flange;
   a bushing designed to pass through the port of the casing and to retain said capture end of said rotatable structure, said bushing including a bushing flange;
   a retaining comb disposed between said structure flange and said bushing flange and designed to allow said rotatable structure to rotate therein; and
   a retainer removably coupleable to the casing and disposed thereon to retain said rotatable structure, said bushing, and said retaining comb together.
2. The retaining assembly of clause 1 wherein the casing is of arcuate configuration and said retainer is of corresponding arcuate configuration.
3. The retaining assembly of clause 2 wherein the casing is formed of a plurality of arcuate sections and said retainer is a unitary component spanning the plurality of arcuate sections.
4. The retaining assembly of clause 3 wherein the plurality of arcuate sections forms an annulus and said retainer includes a pair of said retainers, wherein each of said retainers spans about one-half of the entire circumference of the annulus.
5. The retaining assembly of clause 1 wherein said bushing is a split bushing.
6. In a gas turbine engine having a compressor including a variable vane stage, wherein the variable vane stage includes a plurality of variable stator vanes disposed between a stator casing and an inner vane shroud, for each vane a vane-to-shroud retaining assembly comprising:
   a vane having a trunnion terminating in a trunnion flange;
   a bushing removably retained within a port of the vane shroud for receiving said trunnion, said bushing including a bushing flange;
   a retaining comb disposed between said bushing flange and said trunnion flange, and designed to permit said trunnion to rotate therein; and
   a shroud sealing retainer removably coupleable to the outer surface of the shroud and disposed thereon to retain said retaining comb to said bushing and to said trunnion flange.
7. The retaining assembly of clause 6 wherein the shroud is of arcuate configuration and said retainer is of corresponding arcuate configuration.
8. The retaining assembly of clause 7 wherein the shroud is formed of a plurality of arcuate shroud sections and said retainer is a unitary component spanning the plurality of arcuate shroud sections.
9. The retaining assembly of clause 8 wherein the plurality of arcuate shroud sections forms an annulus and said retainer includes a pair of said retainers, wherein each of said retainers spans about one-half of the entire circumference of the annulus.
10. The retaining assembly of clause 8 wherein each of the arcuate shroud sections includes opposing shroud shoulders, said retainer including capture channels for retaining the shroud shoulders therein.
11. The retaining assembly of clause 6 wherein said bushing is a split bushing.
12. A method for retaining a stator vane of a compressor of a gas turbine engine to a capturing shroud, the method comprising the steps of:
   inserting a vane with a terminating flange into a port of the capturing shroud;
   applying a split bushing to an inner trunnion of said vane, wherein said bushing includes a bushing flange;
   applying a retaining comb between said bushing flange and said terminating flange, wherein said retaining comb is designed to permit said inner trunnion to pass therethrough and rotate therein; and
   applying a shroud retainer to the capturing shroud to retain said retaining comb between said terminating flange and said bushing flange.
13. The method of clause 12 wherein the shroud is of arcuate configuration and further comprising the step of forming said retainer in a corresponding arcuate configuration.
14. The method of clause 13 wherein the shroud is formed of a plurality of arcuate shroud sections, further comprising the step of forming said retainer as a unitary component spanning the plurality of arcuate shroud sections.
15. The method of clause 14 wherein the plurality of arcuate shroud sections forms an annulus and said retainer includes a pair of said retainers, wherein each of said retainers spans about one-half of the entire circumference of the annulus.
16. The method of clause 15 wherein each of the arcuate shroud sections includes opposing shroud shoulders, said retainer including capture channels for retaining the shroud shoulders therein.

## Claims

1. A retaining assembly for retaining a rotatable structure (38) in a port (60) of a casing (42), the assembly comprising:
a rotatable structure (38) having a capture end (62) terminating in a structure flange (64);
a bushing (66) designed to pass through the port (60) of the casing (42) and to retain said capture end (62) of said rotatable structure (38), said bushing (66) including a bushing flange (68);
a retaining comb (72) disposed between said structure flange (64) and said bushing flange (68) and designed to allow said rotatable structure (38) to rotate therein; and
a retainer (76) removably coupleable to the casing (42) and disposed thereon to retain said rotatable structure (38), said bushing (66), and said retaining comb (72) together.

2. The retaining assembly of claim 1 wherein the casing (42) is of arcuate configuration and said retainer (76) is of corresponding arcuate configuration.

3. The retaining assembly of claim 2 wherein the casing (42) is formed of a plurality of arcuate sections (42) and said retainer (76) is a unitary component spanning the plurality of arcuate sections (42).

4. The retaining assembly of claim 3 wherein the plurality of arcuate sections (42) forms an annulus and said retainer (76) includes a pair of said retainers (76), wherein each of said retainers (76) spans about one-half of the entire circumference of the annulus.

5. A vane-to-shroud retaining assembly for a gas turbine engine (10) having a compressor (18) including a variable vane stage (32), wherein the variable vane stage (32) includes a plurality of variable stator vanes (38) disposed between a stator casing (40) and an inner vane shroud (42), the vane-to-shroud retaining assembly comprising:
a vane (38) having a trunnion (62) terminating in a trunnion flange (64); a bushing (66) removably retained within a port (60) of the vane shroud (42) for receiving said trunnion (62), said bushing (66) including a bushing flange (68);
a retaining comb (72) disposed between said bushing flange (68) and said trunnion flange (64), and designed to permit said trunnion (62) to rotate therein; and
a shroud sealing retainer (76) removably coupleable to the outer surface of the shroud (42) and disposed thereon to retain said retaining comb (72) to said bushing (66) and to said trunnion flange (64).

6. The retaining assembly of claim 5 wherein the shroud (42) is of arcuate configuration and said retainer (76) is of corresponding arcuate configuration

7. The retaining assembly of claim 5 wherein the shroud (42) is formed of a plurality of arcuate shroud sections (42) and said retainer (76) is a unitary component spanning the plurality of arcuate shroud sections (42).

8. A method for retaining a stator vane (38) of a compressor (18) of a gas turbine engine (10) to a capturing shroud (42), the method comprising the steps of:
inserting a vane (38) with a terminating flange (64) into a port (60) of the capturing shroud (42);
applying a split bushing (66) to an inner trunnion (62) of said vane (38), wherein said bushing (66) includes a bushing flange (68);
applying a retaining comb (72) between said bushing flange (68) and said terminating flange (64), wherein said retaining comb (72) is designed to permit said inner trunnion (62) to pass therethrough and rotate therein; and
applying a shroud retainer (76) to the capturing shroud (42) to retain said retaining comb (72) between said terminating flange (64) and said bushing flange (68).

9. The method of claim 8 wherein the shroud (42) is of arcuate configuration and further comprising the step of forming said retainer (76) in a corresponding arcuate configuration.

10. The method of claim 9 wherein the shroud (42) is formed of a plurality of arcuate shroud sections (42), further comprising the step of forming said retainer (76) as a unitary component spanning the plurality of arcuate shroud sections (42).
